# EUROPEAN PATENT SPECIFICATION

(11) **EP 4 030 249 B1**
(45) Date of publication and mention of the grant of the patent: **11.06.2025**
(21) Application number: 20862189.6
(22) Date of filing: 09.09.2020
(51) Int. Cl.: G05B 23/02

(54) **INFORMATION PROCESSING DEVICE, OPERATION SUPPORT SYSTEM, INFORMATION PROCESSING METHOD, AND INFORMATION PROCESSING PROGRAM**
INFORMATIONSVERARBEITUNGSVORRICHTUNG, INFORMATIONSVERARBEITUNGSSYSTEM, INFORMATIONSVERARBEITUNGSVERFAHREN UND INFORMATIONSVERARBEITUNGSPROGRAMM
DISPOSITIF DE TRAITEMENT D'INFORMATIONS, SYSTÈME DE PRISE EN CHARGE DE FONCTIONNEMENT, PROCÉDÉ DE TRAITEMENT D'INFORMATIONS ET PROGRAMME DE TRAITEMENT D'INFORMATIONS

(30) Priority: 11.09.2019 JP 2019165382
(43) Date of publication of application: 20.07.2022
(73) Proprietor: Kanadevia Corporation, Osaka-shi, Osaka 559-8559 (JP)
(72) Inventor: UMANO, Motohide, Osaka-shi, Osaka 559-8559 (JP); ISE, Akifumi, Osaka-shi, Osaka 559-8559 (JP); KOHIGASHI, Kiyotaka, Osaka-shi, Osaka 559-8559 (JP); OURA, Yohei, Osaka-shi, Osaka 559-8559 (JP)
(74) Representative: Grünecker Patent- und Rechtsanwälte PartG mbB
(86) International application number: PCT/JP2020/034025
(87) International publication number: WO 2021/049506

(56) References cited:
- EP-A2- 3 441 828
- WO-A1-2019/167375
- JP-A- 2010 237 893
- JP-A- 2013 008 111
- JP-A- 2013 008 111
- JP-A- 2013 061 853

## Description

### Technical Field

The present invention relates to an information processing device which generates information that can be used for supporting an operation of mechanical equipment.

### Background Art

An operator who operates mechanical equipment ascertains a state of the mechanical equipment on the basis of, for example, an output value of a sensor provided in the mechanical equipment, and carries out an operation with respect to the mechanical equipment. A system that supports such an operation of mechanical equipment has been developed conventionally. For example, Patent Literature 1 below discloses a plant support device that (1) outputs an estimated value of a plant on the basis of process data including measurement data such as a flow rate, a pressure, and a temperature, and (2) predicts, on the basis of the estimated value, a future state of the plant and outputs a predicted value of the plant. EP3441828A2 is directed to a plant operation support system and a plant operation support method. The plant performance is obtained as product yield by the formula "product yield=K*F12/F1", wherein F12 represents a reactor 4 outlet flow rate, F1 represents the reactor 1 inlet flow rate, and K is a coefficient obtained by a theoretical formula. Given ideal operation data, the product yield K is 100%. An operation monitoring unit monitors whether the operation data is shifting from the current category to the target category along the operation route determined by the operation route determination unit. WO2019/167375A1 describes a diagnosis device and a diagnosis method. A clustering unit determines whether the operation data of the facility can be classified into an existing cluster, and when it is determined that the operation data cannot be classified, adds a cluster with an abnormal attribute to the existing cluster.

### Citation List

### [Patent Literature]

[Patent Literature 1]
Japanese Patent Application Publication, Tokukai, No. 2018-112903

### Summary of Invention

### Technical Problem

In the conventional technology as described above, a simulation model composed of physical and chemical model equations is used to obtain an estimated value of the plant. Such a simulation model requires setting a large number of parameters and is thus costly to create. In addition, such a simulation model needs to be specialized for the plant and is thus not versatile.

It is an object of an aspect of the present invention to provide: an information processing device which is capable of generating information that can be used for supporting an operation of mechanical equipment and which is easily used for general purposes; and the like.

### Solution to Problem

The invention is described in the claims. The invention provides an information processing device according to claim 1. The invention provides further an operation support system according to claim 9. The invention provides further an information processing method according to claim 10. Preferred embodiments are described in the dependent claims. The embodiments which do not fall within the scope of the claims are to be interpreted as examples useful for a better understanding of the invention. In order to attain the object, an information processing device in accordance to claim 1 is provided.

Further, in order to attain the object, an operation support system in accordance to claim 9 is provided.

Further, in order to attain the object, an information processing method in accordance to claim 10 is provided.

### Advantageous Effects of Invention

According to an aspect of the present invention, it is possible to generate information useful for supporting an operation of mechanical equipment, namely, information indicative of a state of the mechanical equipment. Further, according to an aspect of the present invention, the information processing device is able to generate information indicative of a state of another piece of mechanical equipment upon obtaining sensor data of the another piece of mechanical equipment. Thus, the information processing device can easily be used for general purposes.

### Brief Description of Drawings

Fig. 1 is a block diagram illustrating an example of a main configuration of an information processing device in accordance with Embodiment 1 of the present invention.
Fig. 2 is a view illustrating an overview of an operation support system including the information processing device.
Fig. 3 is a view illustrating an example of classification of sensor data and an example of calculation of a relationship index.
Fig. 4 is a view illustrating examples of a result of classification of values of sensor data respectively outputted by two sensors.
Fig. 5 is a view illustrating examples of a correlation map indicative of a state of a waste incineration plant.
Fig. 6 is a view illustrating an example of setting of a weight.
Fig. 7 is a view illustrating an example of a change in a correlation map.
Fig. 8 is a flowchart illustrating an example of a process carried out by the information processing device.
Fig. 9 is a view illustrating a configuration of an information processing device in accordance with Embodiment 2 of the present invention and a flow of a process carried out by the information processing device.
Fig. 10 is a view illustrating an example of calculation of a stability index.
Fig. 11 is a view illustrating a configuration of an information processing device in accordance with Embodiment 3 of the present invention and an overview of a method of predicting a value of sensor data.
Fig. 12 is a block diagram illustrating an example of a configuration of an information processing device in accordance with Embodiment 4 of the present invention.

### Description of Embodiments

### Embodiment 1

### (Overview of system)

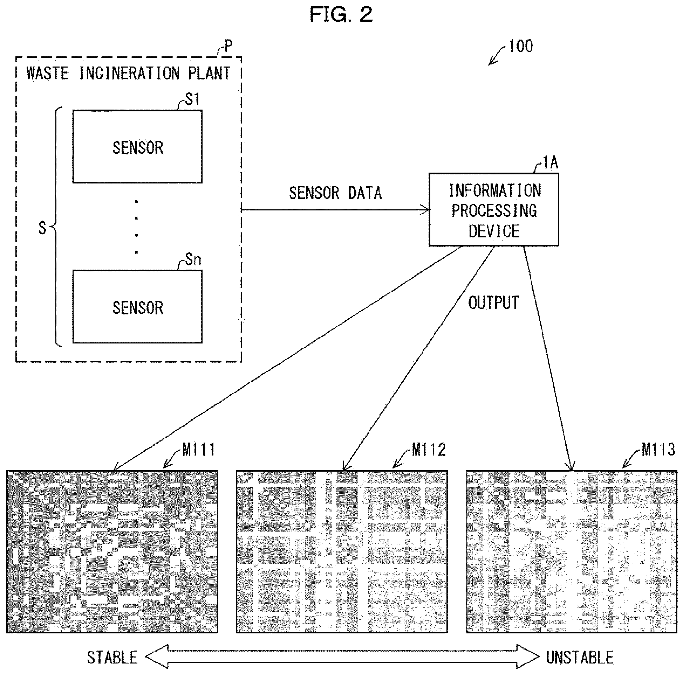

The following description will discuss, with reference to Fig. 2, an overview of an operation support system 100 in accordance with Embodiment 1 of the present invention. Fig. 2 is a view illustrating an overview of the operation support system 100. The operation support system 100 is a system for supporting an operation of various pieces of mechanical equipment and includes sensors S1 through Sn and an information processing device 1A as illustrated in Fig. 2. Note that when there is no need to distinguish the sensors S1 through Sn, the sensors S1 through Sn are simply referred to as "sensor S".

The description of Embodiment 1 will discuss an example in which an operation of a waste incineration plant P is supported by the operation support system 100. The waste incineration plant P includes an incinerator for incinerating waste and power generation equipment for generating electricity by utilizing heat generated in the incinerator. Note that the pieces of mechanical equipment supported by the operation support system 100 are not limited to the waste incineration plant P, provided that operating states of the pieces of mechanical equipment can be ascertained by a sensor or the like and the pieces of mechanical equipment are manually or automatically controlled to operate (operated). For example, the operation support system 100 may also support an operation of wind power generating equipment and the like.

The sensors S each detect a predetermined physical quantity pertaining to a state of the plant or an amount of change in the physical quantity, and output, to the information processing device 1A, sensor data indicative of the detected result. What is detected differs among the sensors S1 through Sn. As described above, in Embodiment 1, for the support of the operation of the waste incineration plant P, the sensors S are installed at various places in the waste incineration plant P. For example, the sensors S may include a temperature sensor that indicates a temperature in the incinerator, a sensor that detects a level of carbon monoxide in exhaust gas, and the like.

Further, the sensors S may be provided to a part of pieces of mechanical equipment of the waste incineration plant P. For example, in a case where a plurality of sensors S are provided to the incinerator, information indicative of a state of the incinerator can be outputted from the information processing device 1A. More specifically, in order for information indicative of a combustion state to be outputted, sensors S provided around the incinerator, such as a thermometer, an air flowmeter, and a measuring device of a speed of a grate, may be used. Further, in a case where a plurality of sensors S are provided to a part of a piece of mechanical equipment, the information processing device 1A can be caused to output information pertaining to that part. For example, in a case where a plurality of sensors S (e.g., a thermometer in the incinerator, a measuring device for measuring a thickness of a waste layer, a CO level meter, and the like) relating to exhaust gas from the incinerator are provided, information pertaining to the exhaust gas can be outputted from the information processing device 1A.

As will be described in detail later, the information processing device 1A obtains sensor data, which are output values of the sensors S in a predetermined period. Subsequently, the information processing device 1A calculates a relationship index indicative of a relationship of a group of two sensors S among the plurality of sensors S, on the basis of a state of distribution (how sensor data are distributed) of sensor data obtained from the respective sensors S of the group. Then, with use of relationship indices calculated with respect to respective groups among the plurality of sensors S, the information processing device 1A generates and outputs information indicative of a state of mechanical equipment in the above predetermined period. Thus, it is possible to generate information useful for supporting an operation of mechanical equipment, namely, information indicative of a state of the mechanical equipment. Further, the information processing device 1A is able to generate information indicative of a state of another piece of mechanical equipment upon obtaining sensor data of the another piece of mechanical equipment. Thus, the information processing device 1A can easily be used for general purposes.

Note that the inventors of the present invention have confirmed by an experiment that a state of mechanical equipment is reflected in a relationship of modes of distribution of pieces of data from a group of sensors S. Further, it has been confirmed that the above configuration makes it possible to ascertain a nonlinear relationship which cannot easily be dealt with by a general analytical technique as disclosed in Patent Literature 1.

In the example illustrated in Fig. 2, the information indicative of a state of the mechanical equipment is maps M111 through M113, each of which indicates a state of the waste incineration plant P. The map M111 is generated with use of sensor data in a stable period, during which the waste incineration plant P is in a stable operating state. The map M113 is generated with use of sensor data in an unstable period, during which an operating state of the waste incineration plant P has become unstable. The map M112 is generated with use of sensor data in an immediately-before-instability period, which is a period immediately before the unstable period. Note that the criteria of being "stable" to "unstable" may be set as appropriate. For example, a period during which an amount of steam used for power generation is in a normal range can be set as the stable period, and a period during which the amount of steam exceeds the normal range can be set as the unstable period.

As illustrated in Fig. 2, the maps M111 through M113 reflect states of the waste incineration plant P from the stable period to the unstable period. More specifically, it can be seen from the maps M111 to M112 that the entire map in the stable period fades in color into the map in the immediately-before-instability period. Further, it can be seen from the maps M112 to M113 that the entire map in the immediately-before-instability period further fades in color into the map in the unstable period.

Thus, on the basis of saturations of colors and a distribution of the colors in an entire map, an operator or the like of the waste incineration plant P can determine a state to which a state of the waste incineration plant P is most similar among the state in the stable period through the state in the unstable period. That is, the operator or the like can determine that the waste incineration plant P is in a stable period in a case where color saturations and a distribution of the colors in the entire map generated on the basis of the most recent sensor data are similar to those in the map M111, and can determine that the waste incineration plant P is in an unstable period in a case where the color saturations and the distribution of the colors are similar to those in the map M113

The map M112 in the immediately-before-instability period and the map M111 in the stable period are distinguishable from each other by appearance. That is, a sign of instability is indicated in a map generated by the information processing device 1A. As such, the operator or the like can take measures to stabilize the waste incineration plant P at a stage prior to the unstable period by referring to the map generated by the information processing device 1A. This makes it possible to prevent the waste incineration plant P from falling into an unstable state.

### (Device configuration)

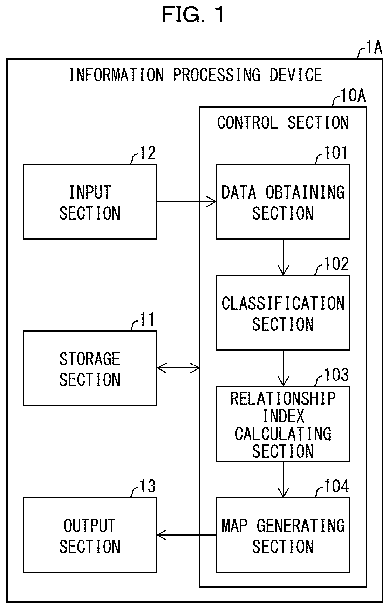

The following description will discuss a more detailed configuration of the information processing device 1A with reference to Fig. 1. Fig. 1 is a block diagram illustrating an example of a main configuration of the information processing device 1A. As illustrated in Fig. 1, the information processing device 1A includes: a control section 10A that centrally controls individual sections of the information processing device 1A; and a storage section 11 that stores various data used by the information processing device 1A. Further, the control section 10A includes a data obtaining section 101, a classification section 102, a relationship index calculating section 103, and a map generating section 104.

The information processing device 1A further includes: an input section 12 that receives input of information to the information processing device 1A; and an output section 13 via which the information processing device 1A outputs information. The input section 12 and the output section 13 may each be a device that is external to the information processing device 1A and externally attached to the information processing device 1A. The description in Embodiment 1 will discuss an example in which the input section 12 is an input interface section that receives input of sensor data outputted by the sensors S, and an example in which the output section 13 is a display device that displays and outputs an image. It should be noted that the input section 12 and the output section 13 are not limited to these examples as long as they have the functions of inputting and outputting information.

The data obtaining section 101 obtains the foregoing sensor data, which are output values of the sensors S. Note that the data obtaining section 101 may obtain, as the sensor data, numerical values calculated with use of the output values of the sensors S (e.g., values obtained by normalizing the output values, or values obtained by removing noise components from the output values). The sensor data can also be referred to as process data. Further, the data obtaining section 101 can obtain, in addition to the sensor data, operation setting values (e.g., setting values of operation speed, or the like) of various pieces of mechanical equipment included in the waste incineration plant P. The operation setting values can also be treated in a similar manner to the sensor data.

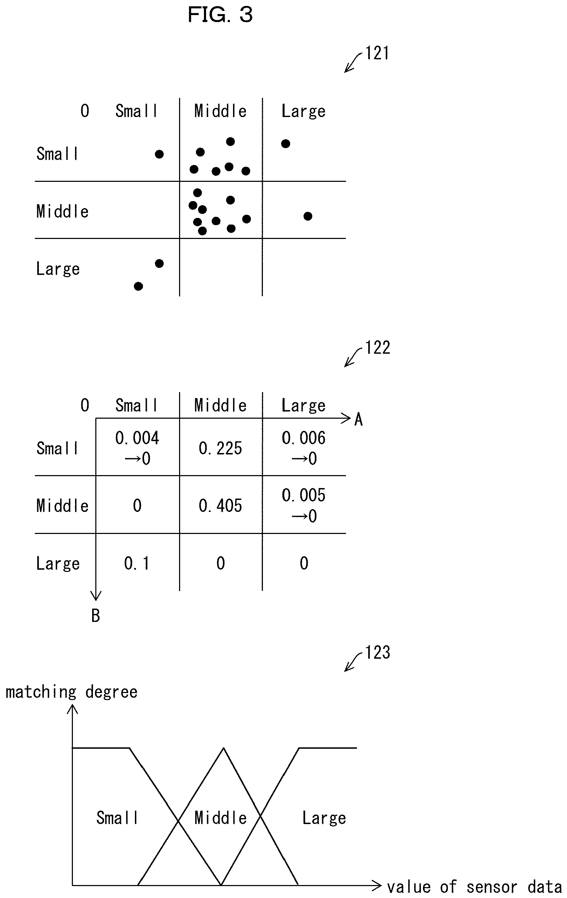

The classification section 102 classifies the sensor data obtained by the data obtaining section 101 into a plurality of sets according to a size of a value of each piece of sensor data. Details of a method of setting the sets and a method of classification into the sets will be described later with reference to Fig. 3 etc.

The relationship index calculating section 103 calculates a relationship index indicative of a relationship of a group of two sensors S among the plurality of sensors S, on the basis of how pieces of sensor data obtained from the respective sensors S of the group are distributed. Specifically, the relationship index calculating section 103 calculates the relationship index on the basis of a frequency of sensor data classified into each of the plurality of sets. This allows a relationship between sensors to be quantified by a simple process. Details of a method of calculating the relationship index will be described later with reference to Fig. 3 etc.

The map generating section 104 generates, with use of relationship indices calculated by the relationship index calculating section 103 for the respective groups of sensors S, a map that is information indicative of a state of the mechanical equipment (in Embodiment 1, the waste incineration plant P) in a predetermined period. As detailed later, the map generated by the map generating section 104 is an image in which a pattern corresponding to a value of a relationship index calculated for each group of sensors S is drawn in a section that is defined on the image plane and that corresponds to the each group. The map generating section 104 generates the map and causes the map to be displayed and outputted by the output section 13 and the like. This enables the map generating section 104 to cause the operator or the like of the waste incineration plant P to visually recognize a state of the waste incineration plant P. Since the map is information indicative of a state of the waste incineration plant P, the map generating section 104 can also be referred to as a state information generating section.

### (Classification of sensor data and calculation of relationship index)

The following description will discuss, with reference to Fig. 3, classification of sensor data carried out by the classification section 102 and calculation of a relationship index carried out by the relationship index calculating section 103. Fig. 3 is a view illustrating an example of classification of sensor data and an example of calculation of a relationship index.

121 of Fig. 3 illustrates a relationship between a value of a piece of sensor data outputted by a sensor SA, which is one of the sensors S1 through Sn, and a value of a piece of sensor data outputted by a sensor SB, which is another one of the sensors S1 through Sn. More specifically, in 121 of Fig. 3, coordinates, which are a combination of a value of a piece of sensor data outputted by the sensor SA and a value of a piece of sensor data outputted by the sensor SB, are plotted on a coordinate plane. The coordinate plane has an axis indicating a size of an output value of the sensor SA along the left-right direction and an axis indicating a size of an output value of the sensor SB along the vertical direction. For example, in a case where pieces of sensor data a1 through a20 are outputted by the sensor SA in a predetermined period during the operation of the waste incineration plant P, and pieces of sensor data b1 through b20 are outputted by the sensor SB during the predetermined period, points (a1, b1) through (a20, b20) are plotted.

In 121 of Fig. 3, the coordinate plane is divided into nine sections. These sections are set on the basis of classes (three stages: Small, Middle, and Large) of a size of a value of each of the pieces of sensor data outputted by the sensors SA and SB. Specifically, nine sections are set, from a section (Small-Small), in which a value of a piece of sensor data outputted by the sensor SA and a value of a piece of sensor data outputted by the sensor SB are both "Small", to a section (Large-Large), in which a value of a piece of sensor data outputted by the sensor SA and a value of a piece of sensor data outputted by the sensor SB are both "Large".

The classification section 102 can classify sensor data on the basis of these sections. In this case, for each of the sensors S, a threshold for classifying sizes of sensor data is preset. For example, for classification of sensor data into three sets as in the example illustrated in Fig. 3, a threshold for sectioning "Small" and "Middle" from each other and a threshold for sectioning "Middle" and "Large" from each other are preset. This enables the classification section 102 to classify a piece of sensor data into any of "Small", "Middle", and "Large" depending on a size of a value of the piece of sensor data. A method of setting the thresholds is not particularly limited. For example, the thresholds can be set on the basis of information (e.g., an average value, a maximum value, a minimum value, and the like) indicative of a distribution of sensor data.

The classification section 102 carries out the above classification for each combination of sensors among the sensors S1 through Sn. The sets into which sensor data are classified can be different among the sensors S1 through Sn. For example, sensor data outputted by the sensor S1 may be classified into two sets, and sensor data outputted by the sensor S2 can be classified into four or more sets.

Further, the classification section 102 can classify sensor data by assigning the sensor data to a plurality of fuzzy sets. This enables a piece of sensor data near a boundary between a set and another set to be appropriately assigned. For example, the classification section 102 may assign sensor data to the following three fuzzy sets: "Small", "Middle" and "Large" with use of a membership function as illustrated in 123 of Fig. 3. The membership function can be created manually or automatically. In a case of automatically creating the membership function, the classification section 102 can, for example, (i) calculate an average value and a standard deviation σ of sensor data and (ii) create the membership function on the basis of a maximum value, a minimum value, and an average value of sensor data that fall within ±3σ of the average value which has been calculated.

The relationship index calculating section 103 calculates a relationship index for each combination of sensors among the sensors S1 through Sn on the basis of a frequency of sensor data classified into each set. In the example illustrated in 121 of Fig. 3, among the 20 plotted points, nine points are included in a "Middle"-"Middle" class, six points are included in a "Middle"-"Small" class, and two points are included in a "Small"-"Large" class. A "Small"-"Small" class, a "Large"-"Small" class, and a "Large"-"Middle" class each contain one point, and the other classes each contain no point.

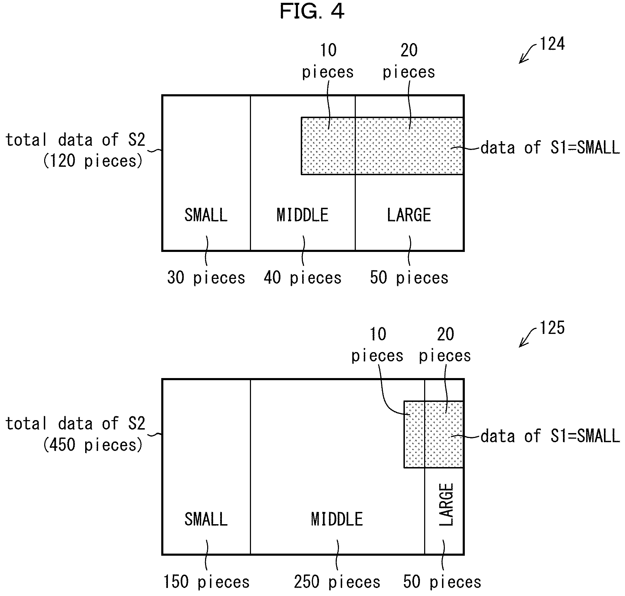

In this case, the relationship index calculating section 103 can set relationship indices of the respective classes to, for example, values as illustrated in 122 of Fig. 3. In the example illustrated in 122 of Fig. 3, a relationship index of the "Middle"-"Middle" class, which contains the largest number of plotted points, is 0.405, and a relationship index of the "Middle"-"Small" class, which contains the second largest number of plotted points, is 0.225. Further, a relationship index of the "Small"-"Large" class, which contains the third largest number of plotted points, is 0.1. Each of the sections containing only one point has a relationship index lower than a predetermined threshold, and thus a relationship index of 0 is set as in the sections containing no point. Thus, in the example illustrated in Fig. 3, the higher a frequency of sensor data in a class, the higher a relationship index in the class. The following description will discuss, with reference to Fig. 4, a method of calculating these relationship indices.

### (Example method of calculating relationship index)

Fig. 4 is a view illustrating examples of a result of classification of values of pieces of sensor data respectively outputted by two sensors S. Specifically, in the example illustrated in 124 of Fig. 4, 30 pieces of sensor data among pieces of sensor data outputted by the sensor S1 are classified as "Small". Among the 30 pieces of sensor data, 10 pieces of sensor data correspond to pieces of sensor data that are outputted by the sensor S2 and classified as "Middle". 20 pieces of sensor data among the 30 pieces of sensor data correspond to pieces of sensor data that are outputted by the sensor S2 and classified as "Large". Further, a total of 120 pieces of sensor data have been outputted by the sensor S2, among which 30 pieces of sensor data are classified as "Small", 40 pieces of sensor data are classified as "Middle", and 50 pieces of sensor data are classified as "Large".

In the example illustrated in 125 of Fig. 4, sensor data outputted by the sensor S1 are classified in the same way as the example illustrated in 124 of Fig. 4, but a total of 450 pieces of sensor data are outputted by the sensor S2 unlike in the example illustrated in 124 of Fig. 4. Among the sensor data outputted by the sensor S2, 150 pieces of sensor data are classified as "Small", 250 pieces of sensor data are classified as "Middle", and 50 pieces of sensor data are classified as "Large".

The relationship index calculating section 103 can calculate a relationship index of each class in accordance with the following equation (1). : (Relationship index) = (occupation rate P) × (coverage rate C) × (ratio R)

The occupation rate P is a ratio of (i) a part of sensor data of the sensor S1 belonging to "Small" which part corresponds to sensor data of the sensor S2 belonging to "Large" to (ii) the sensor data of the sensor S1 belonging to "Small". For example, in the example illustrated in 124 of Fig. 4, the occupation rate P = 20/30.

The coverage rate C is a ratio of (i) to (ii): (i) a part of sensor data of the sensor S1 belonging to "Small" which part corresponds to sensor data of the sensor S2 belonging to "Large"; and (ii) the number of pieces of sensor data of the sensor S2 belonging to "Large". For example, in the example illustrated in 124 of Fig. 4, the coverage rate C = 20/50.

The ratio R is a ratio of pieces of sensor data belonging to "Large" to the total number of pieces of sensor data of the sensor S2. For example, in the example illustrated in 124 of Fig. 4, the ratio R = 50/120.

Thus, in the example illustrated in 124 of Fig. 4, the occupation rate P = 20/30, the coverage rate C = 20/50, and the ratio R = 50/120. As such, the relationship index is 1/9. In the example illustrated in 125 of Fig. 4, the occupation rate P = 20/30, the coverage rate C = 20/50, and the ratio R = 50/450. As such, the relationship index is 4/135.

Note that the multiplication by the ratio R in the equation for calculating the relationship index is not essential, but is preferable because the multiplication by the ratio R allows the value of the relationship index to be reasonable even in a case where, as in the example illustrated in 125 of Fig. 4, the number of pieces of data of a second class significantly differs from the number of pieces of data of each of the other classes. In the above equation (1), at least one of the occupation rate P, the coverage rate C, and the ratio R may be multiplied by a weight. For example, a weight of the occupation rate P is set to a value greater than that of a weight of each of the coverage rate C and the ratio R, or a weight of the coverage rate C and a weight of the ratio R are each set to a value smaller than that of a weight of the occupation rate P. This makes it possible to calculate a relationship index that emphasizes the occupation rate P.

Further, for example, in the equation (1), the weight of the coverage rate C can be set to 0 to calculate the relationship index. In this case, for a combination from an opposite perspective (for example, a combination of the sensor S2 and the sensor S1 as opposed to a combination of the sensor S1 and the sensor S2), a weight of the occupation rate P can be set to 0 to calculate the relationship index. Further, in these cases, weights of the other terms in the equation (1) may be set to 1. In this manner, for combinations (for example, with the sensor S1 and the sensor S2, a combination of S1-S2 and a combination of S2-S1) from respective two viewpoints with the same sensors S, the relationship index may be calculated with use of respective different weights (or different formulae). Also with such configurations, it is possible to generate a correlation map indicative of a state of the waste incineration plant P.

### (Generation of correlation map)

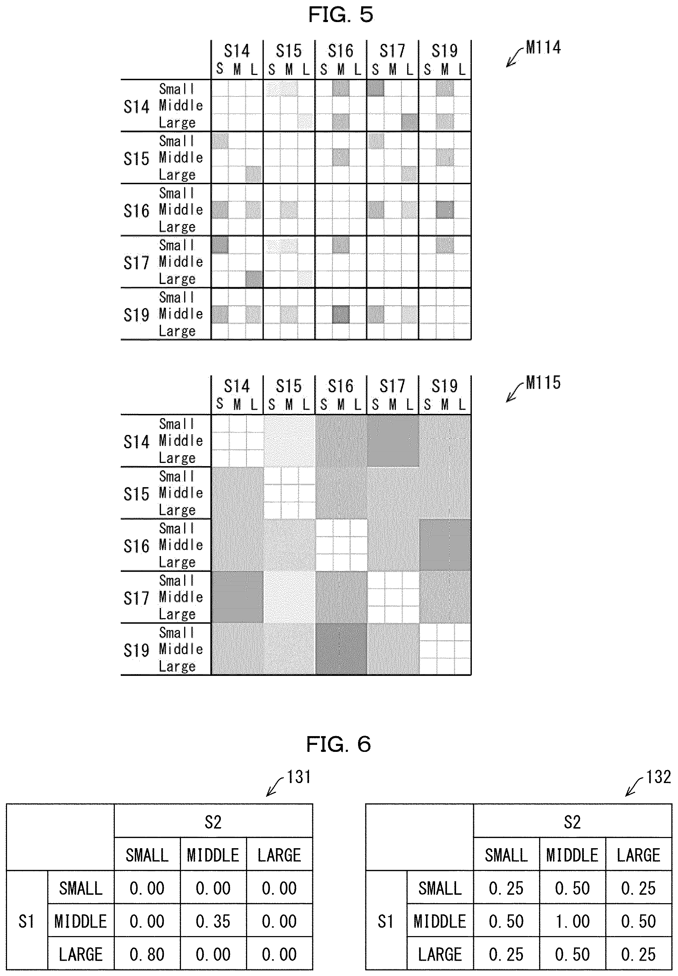

The map generating section 104 uses the above-described relationship indices to generate a correlation map, which is information indicative of a state of the waste incineration plant P. The following description will discuss generation of the correlation map with reference to Fig. 5. Fig. 5 is a view illustrating examples of the correlation map indicative of a state of the waste incineration plant P. Note that Fig. 5 shows a correlation map M114, which is a normal version, and a correlation map M115, which is a simplified version.

In the correlation map M114, with respect to all combinations of the sensors S1 through Sn, a value of a relationship index for each combination of classes is represented by a color. Note that Fig. 5 shows a portion corresponding to combinations each consisting of any of the sensors S14 through S19 and any of the sensors S14 through S19 (excluding combinations of the same sensors S) among all combinations of the sensors S1 through Sn. In some parts of Fig. 5, "Small", "Middle", and "Large" are abbreviated as "S", "M", and "L", respectively.

In the correlation map M114, one section is set for each combination of sensors S, and the one section is further divided into nine small sections. The nine small sections correspond to the "Small", "Middle", and "Large" classes of values of sensor data of a combination of sensors S. For example, a position where a column of the sensor S14 and a row of the sensor S15 intersect with each other is a section corresponding to a combination of the sensors S14-S15. Among the nine small sections included in the section, an upper left small section corresponds to a combination in which sensor data of the sensor S14 and sensor data of the sensor S15 are both "Small". Each of the other small sections likewise corresponds to a combination of classes of sensor data.

The correlation map M114 illustrated in Fig. 5 is generated in the following manner: a small section having a relationship index less than a preset threshold is not colored; the closer a relationship index of a small section is to 1, the closer the small section is colored to black; and the closer a relationship index of a small section is to 0, the closer the small section is colored to white. That is, the correlation map M114 represents a relationship index by a pixel value in a gray scale. In the correlation map M114, a pattern by which the relationship index is represented is optional and is not limited to the examples illustrated in Fig. 5. For example, the relationship index may be represented by a saturation, a hue, a brightness, or combinations thereof. In a case where a rule for converting the relationship index into a color is determined in advance, the map generating section 104 can follow the rule to determine a displayed color of each class of the correlation map M114.

The correlation map M115 is an image in which an image of one pattern is drawn in one section. The pattern in each section is determined using a maximum of nine relationship indices corresponding to that section. Specifically, the map generating section 104 calculates weighted sums of relationship indices included in one section, and sets an average value of the weighted sums as a relationship index of the section. Then, the map generating section 104 determines a pattern corresponding to the value of the relationship index of the section (for example, an image obtained by uniformly filling the entire surface of the section with a pixel value corresponding to the value of the relationship index) as a pattern to be drawn in the section.

Note that a weight may be set to such a value that a state of distribution of sensor data for each combination of sensors S is reflected in a weighted sum. The following describes an example of setting of a weight with reference to Fig. 6. 131 of Fig. 6 shows an example of relationship indices calculated for a combination of the sensors S1 and S2. 132 of Fig. 6 shows an example of setting of weights for the combination of the sensors S1 and S2.

In the example illustrated in 132 of Fig. 6, a weight for a "Middle"-"Middle" combination is set to a highest value (specifically, 1.00). Respective weights for a "Middle"-"Small" combination, a "Middle"-"Large" combination, a "Small"-"Middle" combination, and a "Large"-"Middle" combination are each set to an intermediate value (specifically, 0.50). Respective weights for the other combinations are each set to a low value (specifically, 0.25).

When these weights are applied, an average value of weighted sums for the relationship indices of the combinations of the sensors S1 and S2 illustrated in 131 of Fig. 6 is (0.35×1.00+0.80×0.25)/2 = 0.275. Similarly, for each of all combinations of the sensor S, an average value of weighted sums of relationship indices are calculated, and a pattern corresponding to the calculated value of a relationship index is drawn in a section corresponding to each combination of the sensors S. Through this process, it is possible to draw the correlation map M115 as illustrated in Fig. 5, which is a simplified version. Note that a common value can be set as a weight among all combination of the sensors S, but it is preferable that each combination of sensors S have a weight adjusted to an optimum value.

### (Example of change in correlation map)

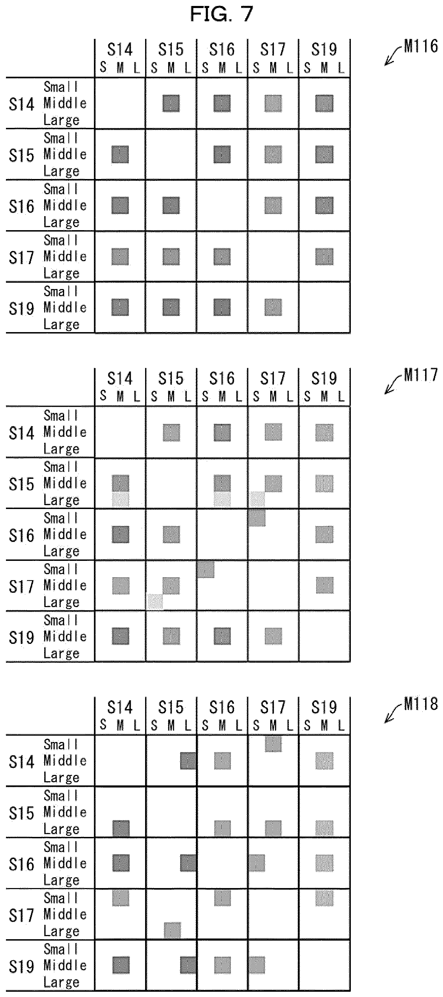

Fig. 7 is a view illustrating an example of a change in a correlation map generated in a manner described above. As with Fig. 5, Fig. 7 shows only a portion of the correlation map. A correlation map M116 illustrated in Fig. 7 is generated on the basis of sensor data obtained in a stable period of the waste incineration plant P. It can be seen from the correlation map M116 that sensor data of the sensors S14 through S19 in the stable period are concentrated in "Middle".

A correlation map M118 illustrated in Fig. 7 is generated on the basis of sensor data obtained in an unstable period of the waste incineration plant P. The correlation map M117 is generated on the basis of sensor data obtained in an immediately-before-instability period. It can be seen from the correlation maps M116 through M118 that a relationship of sizes of the values of the sensor data are gradually disrupted during a period from the stable period through the unstable period.

More specifically, in the correlation map M116, "Middle"-"Middle" small sections each have a color close to black, and the other small sections are not colored. In the correlation map M117, small sections other than the "Middle"-"Middle" small sections are also colored, and some of the "Middle"-"Middle" small sections are not colored. This tendency is more prominent in the correlation map M118, in which even less "Middle"-"Middle" small sections are colored.

As indicated by the correlation map M116 and the correlation map M118, it is possible to recognize, from a correlation map, whether the waste incineration plant P is in a stable period or an unstable period. As indicated by the correlation map M117, it is also possible to recognize, from a correlation map, a sign that the waste incineration plant P will fall into an unstable period.

As such, the map generating section 104 can generate, on the basis of sensor data obtained in a stable period, a reference map which serves as a basis for the operator or the like, who uses the operation support system 100, to determine that the waste incineration plant P is in a stable state. Then, the map generating section 104 can generate a correlation map at any time on the basis of sensor data obtained in real time while the waste incineration plant P is operated, and the map generating section 104 can cause the correlation map thus generated to be displayed and outputted by the output section 13 together with the reference map. This enables the operator or the like to compare the reference map with the current correlation map to determine: whether or not the waste incineration plant P is in a stable state; whether or not there is a sign that the waste incineration plant P will become unstable; or the like.

Note that the map generating section 104 may generate the reference map on the basis of sensor data obtained in an unstable period. In this case, the operator or the like compares the reference map with the current correlation map, and determines that there is a sign that the waste incineration plant P will become unstable, in a case where the current correlation map is similar to the reference map.

### (Flow of process)

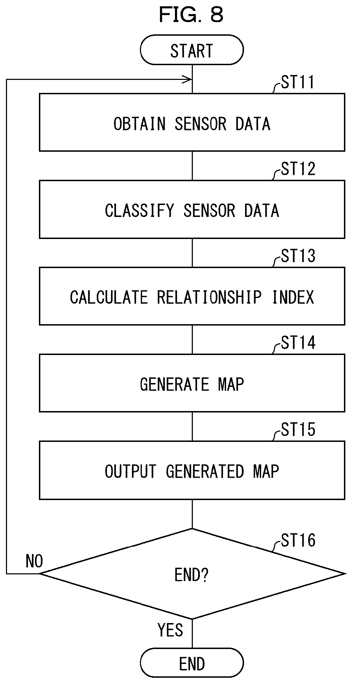

The following description will discuss, with reference to Fig. 8, a flow of a process (an information processing method) carried out by the information processing device 1A. Fig. 8 is a flowchart illustrating an example of a process carried out by the information processing device 1A. The description below discusses an example in which a correlation map is generated. However, in a case where sensor data measured in the waste incinerator plant P that is normally operating is obtained in ST11, Fig. 8 is a flowchart of a process of creating a reference map. The term "normally operating" means a state in which no abnormality has occurred. Examples of the "normally operating" state include: a state in which an operation of the waste incineration plant P can be continued by automatic control without an intervention by a manual operation; a state in which an operation of the waste incineration plant P can be continued according to a predetermined operation plan; a state in which an amount of power generation is stable within a predetermined range; and the like. These states can be called stable periods.

In ST11 (a data obtaining step), the data obtaining section 101 obtains sensor data from all of the sensors S. More specifically, the data obtaining section 101 obtains, via the input section 12, a predetermined number of pieces of sensor data outputted in a predetermined period (e.g., the last three minutes).

In ST12, the classification section 102 classifies each piece of sensor data, which has been obtained in ST11, according to a size of a value of the each piece of sensor data. For example, the classification section 102 may classify sensor data into three stages of Small, Middle, and Large, or may classify the sensor data into two stages or four or more stages. Further, the classification section 102 may classify sensor data according to, for example, a threshold or the like, or may classify sensor data with use of fuzzy sets.

In ST13 (a relationship index calculating step), the relationship index calculating section 103 calculates a relationship index of each class on the basis of a state of distribution of the pieces of sensor data obtained in ST11. As described above, the relationship index calculating section 103 calculates, for each combination of classes, a relationship index in accordance with the numbers of pieces of data included in the respective classes. For example, the relationship index calculating section 103 may calculate the relationship index using the equation (1) described above.

In ST14 (a state information generating step), the map generating section 104 generates, with use of the relationship indices calculated in ST13, a correlation map indicative of a state of the waste incineration plant P. Specifically, the map generating section 104 generates the correlation map by determining, for each of the combinations of the Small, Middle, and Large classes in the section of each combination of sensors S, a pattern to be drawn according to the relationship index of the each of the combinations.

In ST15, the map generating section 104 causes the output section 13 to display and output the correlation map generated in ST14. Note that, in a case where a correlation map is already being displayed by the output section 13, the map generating section 104 may update the correlation map being displayed with the newly generated correlation map. This enables the content of the displayed correlation map to always indicate the latest state of the waste incineration plant P.

In ST16, the data obtaining section 101 determines whether or not to end the process. In a case where the data obtaining section 101 determines that the process is to be ended (YES in ST16), the process illustrated in Fig. 8 is ended. In a case where the data obtaining section 101 determines that the process is to be continued (NO in ST16), the process returns to the process in ST11. A condition for making the determination in ST16 may be set as appropriate. For example, the data obtaining section 101 may determine that the process is to be ended in a case where the waste incineration plant P has stopped operating. This makes it possible to support an operation of the waste incineration plant P by displaying the correlation map during a period until the waste incineration plant P stops operating.

### Embodiment 2

The following description will discuss another embodiment of the present invention. For convenience, members which are identical in function to the members described in Embodiment 1 are given respective identical reference signs, and descriptions of those members are not repeated. The same applies to Embodiment 3 and the subsequent embodiments.

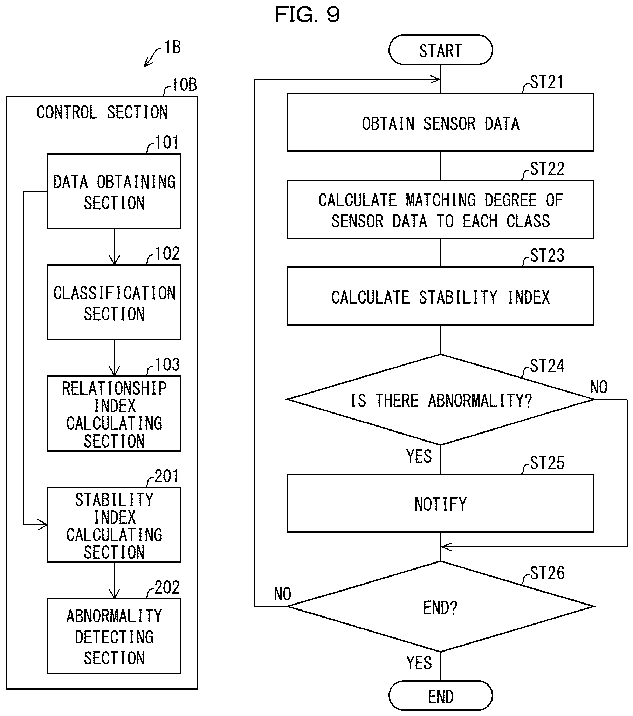

An information processing device 1B in accordance with Embodiment 2 differs from the information processing device 1A in accordance with Embodiment 1 described above, in that the information processing device 1B automatically detects an occurrence of an abnormality in the waste incineration plant P or a sign of the occurrence of an abnormality. The following description will discuss the information processing device 1B with reference to Fig. 9. Fig. 9 is a view illustrating a configuration of the information processing device 1B and a flow of a process carried out by the information processing device 1B. In the information processing device 1B, configurations of members other than a control section 10B are the same as those of the information processing device 1A (see Fig. 1). As such, Fig. 9 shows a configuration of the control section 10B.

As illustrated in Fig. 9, the information processing device 1B differs from the information processing device 1A in that the information processing device 1B includes a stability index calculating section 201 and an abnormality detecting section 202 instead of the map generating section 104. Note that the map generating section 104 may be also included in the control section 10B.

The stability index calculating section 201 calculates a stability index with use of sensor data obtained by a data obtaining section 101. The stability index is an index that indicates a degree of similarity between (i) a state of distribution of sensor data when the waste incineration plant P is in a stable operating state and (ii) a state of distribution of sensor data obtained by the data obtaining section 101. Since the stability index is information indicative of a state of the waste incineration plant P, the stability index calculating section 201 can be also referred to as a state information generating section.

By including the stability index calculating section 201, the information processing device 1B is capable of numerically indicating whether an operating state of the waste incineration plant P is close to a stable state or far from the stable state (i.e., unstable). The stability index can be displayed and outputted in the same manner as the correlation map to be presented to the operator or the like, or can be used in detection of an abnormality and the like as described below.

The stability index may be calculated, for example, as follows. Note that, prior to the calculation of the stability index by the stability index calculating section 201, the relationship index calculating section 103 calculates a relationship index with use of sensor data when the waste incineration plant P is in a stable operating state. In the following description, a relationship index calculated with use of sensor data when the waste incineration plant P is in a stable operating state is referred to as a stable-time relationship index. Note that the above-described reference map can be created with use of the stable-time relationship index.

First, the stability index calculating section 201 calculates a matching degree between a value of the sensor data obtained by the data obtaining section 101 and each of the classes that are based on a size of a value of the sensor data. The sensor data are data indicative of a state of the waste incineration plant P with respect to which the stability index is to be calculated. Next, the stability index calculating section 201 calculates a stability index of each class on the basis of a stable-time relationship index in each class and the matching degree calculated with respect to the class. Then, the stability index calculating section 201 calculates a stability index for each combination of sensors S on the basis of stability indices of the respective classes, and uses, as a final stability index, a sum of stability indices which have been thus calculated for the respective combinations.

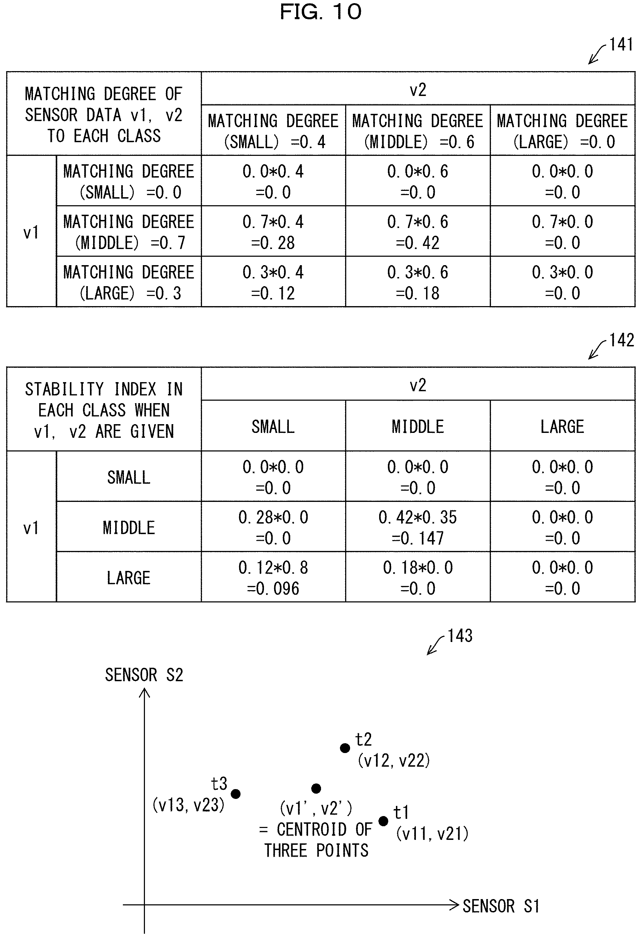

The following description will discuss, with reference to Fig. 10, an example of calculation of a stability index in a case where the relationship index shown in 131 of Fig. 6 is calculated as a stable-time relationship index of a combination of the sensor S1 and the sensor S2. Fig. 10 is a view illustrating an example of calculation of a stability index. Note that a value of sensor data of the sensor S1 at a time t after the calculation of the stable-time relationship index and a value of sensor data of the sensor S2 at the time t are v1 and v2, respectively.

In this case, as illustrated in 141 of Fig. 10, the stability index calculating section 201 calculates a matching degree indicative of a degree to which v1 matches each of classes (Small, Middle, Large) of a size of a value of the sensor S1. The matching degree can be calculated with use of a membership function for each class of a size of a value of the sensor S1. In the example illustrated in 141 of Fig. 10, matching degrees between v1 and the "Small", "Middle", and "Large" classes are calculated as 0.0, 0.7, and 0.3, respectively.

The stability index calculating section 201 likewise calculates a matching degree between v2, which is a value of the sensor data of the sensor S2 and each of classes (Small, Middle, Large) of a size of a value of the sensor S2. In the example illustrated in 141 of Fig. 10, matching degrees between v2 and the "Small", "Middle", and "Large" classes are calculated as 0.4, 0.6, and 0.0, respectively.

Then, the stability index calculating section 201 multiplies the matching degree of v1 by the matching degree of v2 to calculate a matching degree for each class of a combination of sizes of a value. In the example illustrated in 141 of Fig. 10, a matching degree of a "Middle"-"Small" class is 0.7×0.4 = 0.28, and a matching degree of a "Middle"-"Middle" class is 0.7×0.6 = 0.42. A matching degree of a "Large"-"Small" class is 0.3 × 0.4 = 0.12, and a matching degree of a "Large"-"Middle" class is 0.3 × 0.6 = 0.18. A matching degree of each of the other classes is 0.0.

Next, the stability index calculating section 201 calculates a stability index in each class of a combination of sizes of a value by multiplying a stable-time relationship index by the matching degree that has been calculated with respect to the class. In the example illustrated in 131 of Fig. 6, a relationship index of the "Middle"-"Middle" class is 0.35, a relationship index of the "Large"-"Small" class is 0.8, and a relationship index of each of the other classes is 0.0. As such, a stability index of the "Middle"-"Middle" class is 0.35×0.42 = 0.147, and a stability index of the "Large"-"Small" class is 0.12×0.8 = 0.096.

Then, the stability index calculating section 201 sums the stability indices of the respective classes, and uses a sum thus obtained as a stability index at a time when the sensor data of v1 and v2 were measured. That is, a stability index in the example illustrated in 142 of Fig. 10 is 0.147+0.096 = 0.243. The stability index calculating section 201 carries out the above process for all combinations of the sensors S, and uses, as a stability index at the time t, a sum of stability indices thus calculated for the respective combinations.

The stability index calculated in this manner has a value which increases as a similarity between a state of distribution of the sensor data obtained by the data obtaining section 101 and a state of distribution of the sensor data when the waste incineration plant P is in a stable operating state increases. As such, it can be said that the stability index indicates a degree of similarity between (i) a state of distribution of the sensor data when the waste incineration plant P is in a stable operating state and (ii) a state of distribution of the sensor data obtained by the data obtaining section 101.

The stability index calculating section 201 can also calculate a stability index in consideration of time-series changes in sensor data. For example, the stability index calculating section 201 may calculate a position of a center of time-series sensor data and use the position of the center to calculate a stability index. This will be explained with reference to 143 of Fig. 10. In the example illustrated in 143 of Fig. 10, it is assumed that sensor data (v11, v21), (v12, v22), and (v13, v23) are measured by the sensors S1 and S2 at times t1, t2, and t3.

In this case, the stability index calculating section 201 calculates a center (v1', v2') of (v11, v21), (v12, v22), and (v13, v23). Then, the stability index calculating section 201 can calculate a stability index at the times t1 through t3 by the same arithmetic operation as in the above-described example in which a stability index is calculated with use of v1 and v2.

The stability index calculating section 201 may thus (1) use a plurality of pieces of sensor data measured in a predetermined period to calculate data (in the above example, coordinates of the position of the center) indicative of a state of the waste incineration plant P in the period and (2) use the data to calculate a stability index. This enables the stability index calculating section 201 to calculate a stability index in consideration of time-series changes in sensor data in the period.

Note that, instead of a stability index, it is possible to calculate an unstable index which indicates a degree to which a state of distribution of sensor data obtained by the data obtaining section 101 and a state of distribution of sensor data when the waste incineration plant P is in an unstable operating state are similar to each other as a whole. Further, it is possible to use, as a stability index, information indicative of a degree of deviation between a state of distribution of sensor data obtained by the data obtaining section 101 and a state of distribution of sensor data when the waste incineration plant P is an unstable operating state. Thus, an operating state used as a reference in calculation of a stability index or an unstable index may be a stable state or an unstable state.

The abnormality detecting section 202 detects an abnormality of the waste incineration plant P on the basis of a stability index calculated by the stability index calculating section 201. The abnormality to be detected by the abnormality detecting section 202 includes not only an unstable state of the waste incineration plant P but also a state in which a tendency toward an unstable state of the waste incineration plant P appears.

The abnormality detecting section 202 may determine that an abnormality has occurred when the stability index becomes less than or equal to a predetermined threshold. The abnormality detecting section 202 may also determine a presence or absence of an abnormality on the basis of a rate of change in the stability index. For example, the abnormality detecting section 202 can determine, when the stability index sharply decreases in a short time, that an abnormality has occurred, and can determine, when the stability index is continually decreasing for a predetermined period, that an abnormality has occurred.

In a case where the abnormality detecting section 202 determines that there is a possibility that an abnormality has occurred, the abnormality detecting section 202 notifies the operator or the like of such. An aspect of notification is not particularly limited. For example, the abnormality detecting section 202 can notify the operator or the like by causing the output section 13 to display information indicating that an abnormality has been detected. Note that the determination of a presence or absence of an abnormality and the notification may be carried out by respective different process blocks.

The following description will discuss a flow of a process (an information processing method) carried out by the information processing device 1B. Note that processes in ST21 and ST26 are similar to the processes in ST11 and ST16 of Fig. 8. As such, the processes in ST22 through ST25 will be described below.

In ST22, the stability index calculating section 201 calculates a matching degree of sensor data obtained in ST21 to each class. Specifically, as described with reference to Fig. 10, the stability index calculating section 201 calculates, for each combination of sensors S, matching degrees between the sensor data obtained in ST21 and the respective three classes of "Small", "Middle", and "Large". Then, the stability index calculating section 201 multiplies the thus calculated matching degrees to calculate matching degrees between the sensor data obtained in ST21 and the respective nine classes of "Small"-"Small" through "Large"-"Large".

In ST23 (a state information generating step), the stability index calculating section 201 calculates a stability index indicative of a state of the waste incineration plant P with use of the matching degrees calculated in ST22. Specifically, as described with reference to Fig. 10, the stability index calculating section 201 calculates the stability index by an arithmetic operation of multiplying the stable-time relationship indices by the matching degrees calculated in ST22.

In ST24, the abnormality detecting section 202 determines a presence or absence of an abnormality on the basis of the stability index calculated in ST23. In a case where it is determined in ST24 that there is an abnormality (YES at ST24), the process proceeds to the process in ST25, and in ST25, the abnormality detecting section 202 notifies the operator or the like that an abnormality has been detected. In a case where it is determined in ST24 that there is no abnormality (NO at ST24), the process proceeds to the process in ST26.

In ST23, the stability index calculating section 201 may calculate a stability index with respect to a part of the combinations of the sensors S in addition to a stability index with respect to the entire combinations of the sensors S. In this case, in ST24, in a case where the abnormality detecting section 202 determines that there is no abnormality on the basis of the stability index with respect to the entire combinations of the sensors S, the abnormality detecting section 202 can determine again a presence or absence of an abnormality on the basis of the stability index for the part of the combinations of the sensors S. This allows an abnormality to be detected also in a case where a sign of the abnormality is difficult to recognize on the basis of the entire combinations but is indicated in output values of a part of the sensors S.

### (Machine learning)

The abnormality detecting section 202 may detect an abnormality of the waste incineration plant P with use of a learned model that has been constructed by machine-learning a relationship between a relationship index calculated by the relationship index calculating section 103 and a state of the waste incineration plant P. In this case, the stability index calculating section 201 is omitted, and the abnormality detecting section 202, which inputs a relationship index to the learned model and outputs information indicative of whether or not the waste incineration plant P has an abnormality, functions as a state information generating section.

In the above machine learning, for example, it is possible to use, as training data, (i) a relationship index calculated from sensor data obtained when the waste incineration plant P is operating normally and (ii) a relationship index calculated from sensor data obtained earlier, by a predetermined time period, than an occurrence of an abnormality in the waste incineration plant P. By inputting the relationship index calculated by the relationship index calculating section 103 to the learned model constructed by the above mechanical learning, it is possible to obtain (i) an output value indicative of a possibility that the waste incineration plant P is operating normally and (ii) an output value indicative of a possibility that an abnormality will occur after an elapse of a predetermined time period.

In this case, the abnormality detecting section 202 can detect an abnormality of the operating state in a case where, for example, the output value indicative of a possibility that the waste incineration plant P is operating normally is less than a predetermined threshold. Further, the abnormality detecting section 202 can detect a sign of occurrence of an abnormality, for example, in a case where the output value indicative of a possibility of occurrence of an abnormality after an elapse of a predetermined time period is equal to or greater than a threshold.

### Embodiment 3

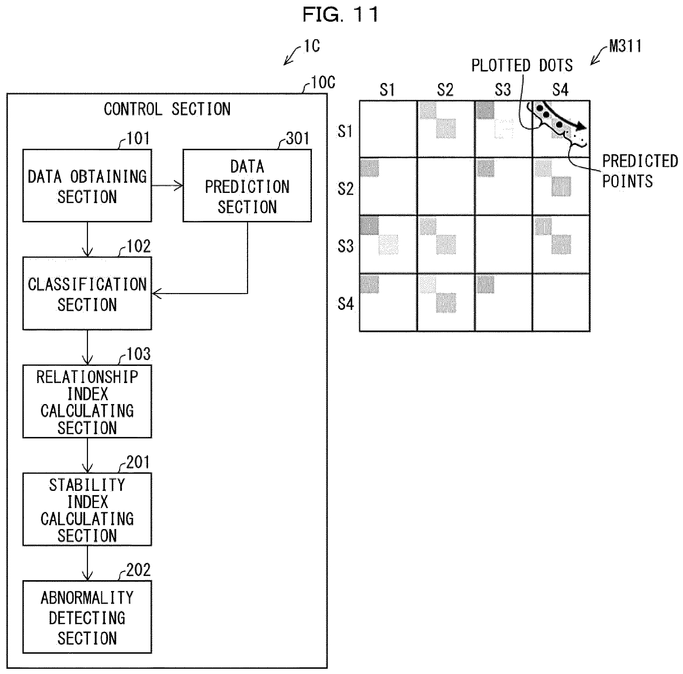

The description of Embodiment 3 will discuss an example in which, on the basis of a change in a value of obtained sensor data, a value of subsequent sensor data is predicted, and an abnormality is detected on the basis of the predicted value of the sensor data. An information processing device 1C in accordance with Embodiment 3 will be described with reference to Fig. 11. Fig. 11 is a view illustrating a configuration of the information processing device 1C and an overview of a method of predicting a value of sensor data. In the information processing device 1C, configurations of members other than a control section 10C are the same as those of the information processing device 1A (see Fig. 1). As such, Fig. 11 shows a configuration of the control section 10C.

The information processing device 1C differs from the information processing device data 1B (see Fig. 9) in accordance with Embodiment 2 in that the information processing device 1C includes a data prediction section 301. The data prediction section 301 calculates, on the basis of a change in a value of sensor data obtained by a data obtaining section 101, a predicted value of a value of subsequent sensor data. Then, a classification section 102 classifies the predicted value, and a relationship index calculating section 103 calculates a relationship index on the basis of this classification. As such, the stability index calculating section 201 can calculate, on the basis of the predicted value, a stability index indicative of a future state of the waste incineration plant P. By using the stability index, it is possible to take, before an operating state of the waste incineration plant P becomes unstable, a measure for preventing the operating state from becoming unstable.

In a S1-S4 section in a correlation map M311 illustrated in Fig. 11, sets of coordinates are plotted, each of which sets is a combination of a value of sensor data outputted by the sensor S1 and a value of sensor data outputted by the sensor S4. As indicated by an arrow in Fig. 11, points thus plotted are such that the later data in time series a point corresponds to, the closer to a lower right side in the section the point is located. As such, the data prediction section 301 can predict, on the basis of this tendency, a position (a group of values of pieces of sensor data respectively outputted by the sensors S1 and S4) of a point in the future. For example, the data prediction section 301 may obtain an approximation curve on the basis of sets of coordinates of time-series points that have been plotted up to the present time point, and calculate, on the basis of the approximation curve, coordinates of a point to be plotted in the future.

Further, for example, the data prediction section 301 may calculate, on the basis of time-series sensor data (trend data indicating a tendency of time-series changes in sensor data) up to the present time point, a predicted value of a value of sensor data in the future. In this case, for example, sensor data measured in the last predetermined time period (e.g., 30 minutes) may be used.

Processes after the calculation of the predicted value are similar to those in Embodiment 2. Note that the map generating section 104 described in Embodiment 1 may be included in the control section 10C of the information processing device 1C. In this case, a correlation map indicating a future state of the waste incineration plant P can be created on the basis of the predicted value calculated by the data prediction section 301.

### Embodiment 4

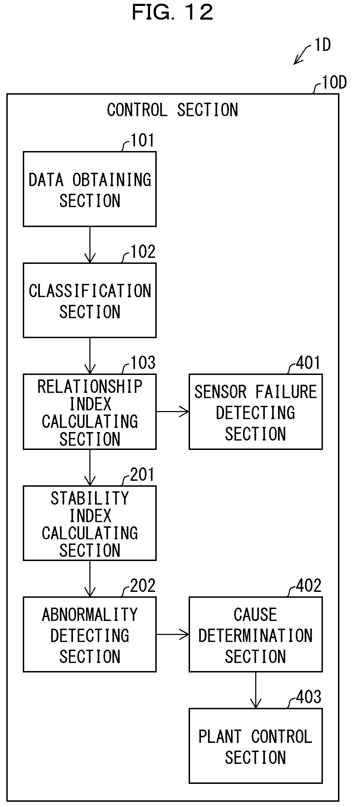

The description of Embodiment 4 discusses an information processing device 1D having a function of detecting a failure in a sensor S and a function of determining a cause of an abnormality of the waste incineration plant P when the abnormality is detected. Fig. 12 is a block diagram illustrating an example of a configuration of the information processing device 1D. In the information processing device 1D, configurations of members other than a control section 10D are the same as those of the information processing device 1A (see Fig. 1). As such, Fig. 12 shows a configuration of the control section 10D.

The information processing device 1D differs from the information processing device data 1B (see Fig. 9) in accordance with Embodiment 2 in that the information processing device 1D includes a sensor failure detecting section 401, a cause determination section 402, and a plant control section 403. Note that the sensor failure detecting section 401, the cause determination section 402, and the plant control section 403 do not cooperate with each other. As such, any one(s) of the sensor failure detecting section 401, the cause determination section 402, and the plant control section 403 may be omitted. Further, it is possible to provide the cause determination section 402 and omit the plant control section 403. The sensor failure detecting section 401 can also be included in the information processing device 1A in accordance with Embodiment 1.

The sensor failure detecting section 401 detects, on the basis of relationship indices calculated with respect to respective groups of the plurality of sensors S, a sensor S in which a failure has occurred. In a case where the plurality of sensors S include a sensor S having a failure, a relationship index calculated with use of sensor data outputted by the sensor S having the failure deviates from a normal range. This can be utilized in the above detection. For example, the sensor failure detecting section 401 can (i) cause the stability index calculating section 201 to calculate stability indices with respect to the respective sensors S and (ii) detect, as a sensor S in which a failure has occurred, a sensor S with respect to which the calculated stability index is equal to or less than a threshold.

The cause determination section 402 determines, on the basis of relationship indices calculated with respect to the respective groups of the plurality of sensors S, a cause because of which the waste incineration plant P has fallen into a state indicated by the stability index calculated by the stability index calculating section 201. This makes it possible to take an appropriate measure according to the cause and to thereby enable the waste incineration plant P to be in a more preferable state.

More specifically, the cause determination section 402 determines a cause of instability in a case where the abnormality detecting section 202 determines that there is an abnormality. Then, the plant control section 403 carries out control according to a determination result of the determination of the cause determination section 402 to thereby stabilize the state of the waste incineration plant P. Note that the cause determination section 402 may notify the operator or the like of the determination result by displaying and outputting the determination result. In this case, the state of the waste incineration plant P is stabilized by a manual operation by the operator.

In the determination of the cause, a correlation between a relationship index and a cause is used. For example, in a case where (i) the state of the waste incineration plant P is unstable and (ii) a relationship between a temperature of an afterburner grate and a flow rate of primary combustion air, which relationship is indicated by relationship indices, is "Small" and "Large", it is possible that an insufficient supply of waste to the incinerator is the cause. Accordingly, in a case where sensor data outputted by a sensor S that indicates a temperature of an afterburner grate and sensor data outputted by a sensor S that indicates a flow rate of primary combustion air are in a relationship of "Small" and "Large", the cause determination section 402 can determine that an insufficient supply of waste to the incinerator is the cause. Thus, relationship indices can be used as a whole as information indicative of a state of the waste incineration plant P, and a result of analysis of portions of the relationship indices can be used to identify a cause of instability, and the like.

The plant control section 403 controls an operation of the waste incineration plant P. For example, the plant control section 403 can control an operation of the waste incineration plant P by controlling a control device which controls operations of various devices included in the waste incineration plant P.

The plant control section 403 also functions as an equipment control section which, in a case where each of relationship indices calculated with respect to respective groups of the plurality of sensors S satisfies a predetermined condition, causes the waste incineration plant P to carry out an operation for bringing the waste incineration plant P into a normal state. This makes it possible to automatically stabilize the state of the waste incineration plant P.

Specifically, the plant control section 403 carries out control according to a determination result of the cause determination section 402 to thereby stabilize the state of the waste incineration plant P, as described above. In a case where each of relationship indices calculated with respect to respective groups of the plurality of sensors S satisfies a predetermined condition, the cause determination section 402 identifies a cause corresponding to the condition. As such, the plant control section 403 carries out control in a case where the above condition is satisfied. The content of control for each cause can be determined in advance. For example, in a case where an insufficient supply of waste to the incinerator is the cause, the plant control section 403 can carry out a control so as to cause waste to be supplied to the incinerator. Note that the cause determination section 402 can be omitted and the plant control section 403 can determine whether or not the predetermined condition is satisfied.

### [Variation]

An entity that carries out each process described in each of the foregoing embodiments can be changed as appropriate. For example, the processes other than ST14 in Fig. 8 can be carried out by one or more devices other than the information processing device 1A. For example, the processes in ST11 and ST12 can be carried out by another information processing device, and the process in ST13 can be carried out by yet another information processing device. In this case, the information processing device 1A obtains a relationship index calculated by the yet another information processing device and generates a map. The same applies to the flowchart in Fig. 9, and an entity that carries out each process can be changed as appropriate.

Further, the configuration in which sensor data are classified into sets such as Large, Middle, and Small is a technique for representing an aspect of a distribution of the sensor data, and can be replaced by another method that can express an aspect of a distribution of the sensor data.

### [Software Implementation Example]

Control blocks of each of the information processing devices 1A through 1D (particularly, the sections included in each of the control sections 10A through 10D) can be realized by a logic circuit (hardware) provided in an integrated circuit (IC chip) or the like or can be alternatively realized by software.

In the latter case, each of the information processing devices 1A through 1D includes a computer that executes instructions of a program (information processing program) that is software realizing the foregoing functions. The computer, for example, includes at least one processor and a computer-readable storage medium storing the program. An object of the present invention can be achieved by the processor of the computer reading and executing the program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit. The computer may further include a random access memory (RAM) or the like in which the program is loaded. Further, the program may be made available to the computer via any transmission medium (such as a communication network and a broadcast wave) which allows the program to be transmitted. Note that an aspect of the present invention can also be achieved in the form of a computer data signal in which the program is embodied via electronic transmission and which is embedded in a carrier wave.

The present invention is not limited to the embodiments, but can be altered by a skilled person in the art within the scope of the claims.

### Reference Signs List

1A to 1D: information processing device
101: data obtaining section
102: classification section
103: relationship index calculating section
104: map generating section (state information generating section)
201: stability index calculating section (state information generating section)
301: data prediction section
401: sensor failure detecting section
402: cause determination section
403: plant control section (equipment control section)
P: waste incineration plant (mechanical equipment)
S: sensor

## Claims

1. An information processing device (1A, 1B, 1C, 1D), comprising:
a data obtaining section (101) configured to obtain sensor data, the sensor data being (i) output values of a plurality of sensors (S) in a predetermined period or (ii) numerical values calculated with use of the output values, the plurality of sensors being provided in mechanical equipment;
a classification section (102) configured to classify the pieces of the sensor data into each of a plurality of sets according to a size of a value of each piece of the sensor data;
a relationship index calculating section (103) configured to calculate a relationship index indicative of a relationship of a group of two sensors among the plurality of sensors, on the basis of a state of distribution of pieces of the sensor data which pieces are obtained from the two sensors of the group, wherein the relationship index calculating section is further configured to calculate each of a plurality of relationship indices for each of the plurality of sets of each combination of two sensors among the plurality of sensors, on the basis of a frequency of the classified pieces of the sensor data in the respective set;
a state information generating section configured to generate information indicative of a state of the mechanical equipment in the predetermined period, with use of the plurality of relationship indices.

2. The information processing device as set forth in claim 1, wherein
the classification section is configured to classify the sensor data by assigning the sensor data to a plurality of fuzzy sets.

3. The information processing device as set forth in any one of claims 1 through 2, wherein the state information generating section is configured to generate, as the information indicative of the state of the mechanical equipment, an image in which a pattern corresponding to values of the plurality of relationship indices calculated for each group of two sensors among the plurality of sensors is drawn in a section that is defined on an image plane and that corresponds to the each group of two sensors.

4. The information processing device as set forth in any one of claims 1 through 2, wherein the state information generating section is configured to generate, as the information indicative of the state of the mechanical equipment, information indicative of a degree of similarity between the following (i) and (ii): (i) a state of distribution of the sensor data obtained by the data obtaining section and (ii) a state of distribution of the sensor data when the mechanical equipment is in an operating state that serves as a reference.

5. The information processing device as set forth in any one of claims 1 through 4, further comprising
a data prediction section configured to calculate, on the basis of a change in a value of the sensor data obtained by the data obtaining section, a predicted value of a value of subsequent sensor data,
the state information generating section being configured to generate, on the basis of the predicted value, information indicative of a future state of the mechanical equipment.

6. The information processing device as set forth in any one of claims 1 through 5, further comprising
a cause determination section configured to determine, on the basis of the plurality of relationship indices calculated with respect to each group of two sensors among the plurality of sensors, a cause because of which the mechanical equipment has fallen into the state indicated by the information generated by the state information generating section.

7. The information processing device as set forth in any one of claims 1 through 5, further comprising
an equipment control section configured to, in a case where a relationship index of the plurality of relationship indices calculated with respect to each group of two sensors among the plurality of sensors satisfies a predetermined condition, cause the mechanical equipment to carry out an operation for bringing the mechanical equipment into a normal state.

8. The information processing device as set forth in any one of claims 1 through 5, further comprising
a sensor failure detecting section configured to detect, on the basis of the plurality of relationship indices calculated with respect to each group of two sensors among the plurality of sensors, a sensor in which a failure has occurred.

9. An operation support system for supporting an operation of mechanical equipment, comprising:
an information processing device; and
a plurality of sensors provided in the mechanical equipment,
the information processing device being configured to:
obtain sensor data, the sensor data being (i) output values of the plurality of sensors in a predetermined period or (ii) numerical values calculated with use of the output values;
classify the pieces of the sensor data into each of a plurality of sets according to a size of a value of each piece of the sensor data;
calculate a relationship index indicative of a relationship of a group of two sensors among the plurality of sensors, on the basis of a state of distribution of pieces of the sensor data which pieces are obtained from the two sensors of the group, and further calculate each of a plurality of relationship indices for each of the plurality of sets of each combination of two sensors among the plurality of sensors, on the basis of a frequency of the classified pieces of the sensor data in the respective set; generate information indicative of a state of the mechanical equipment in the predetermined period, with use of the plurality of relationship indices.

10. An information processing method to be carried out by an information processing device, the method comprising:
a data obtaining step of obtaining sensor data, the sensor data being (i) output values of a plurality of sensors in a predetermined period or (ii) numerical values calculated with use of the output values, the plurality of sensors being provided in mechanical equipment;
a classification step of classifying the pieces of the sensor data into each of a plurality of sets according to a size of a value of each piece of the sensor data;
a relationship index calculating step of calculating a relationship index indicative of a relationship of a group of two sensors among the plurality of sensors, on the basis of a state of distribution of pieces of the sensor data which pieces are obtained from the two sensors of the group, and of further calculating each of a plurality of relationship indices for each of the plurality of sets of each combination of two sensors among the plurality of sensors, on the basis of a frequency of the classified pieces of the sensor data in the respective set;
a state information generating step of generating information indicative of a state of the mechanical equipment in the predetermined period, with use of the plurality of relationship indices.

11. An information processing program for causing a computer to function as the information processing device recited in claim 1, the information processing program causing the computer to function as the data obtaining section, the relationship index calculating section, the state information generating section, and the classification section.

## Patentansprüche

1. Informationsverarbeitungsvorrichtung (1A, 1B, 1C, 1D), umfassend:
einen Datenerfassungsabschnitt (101), der dazu konfiguriert ist, Sensordaten zu erhalten, wobei die Sensordaten (i) Ausgabewerte einer Vielzahl von Sensoren (S) in einem vorbestimmten Zeitraum oder (ii) numerische Werte sind, die unter Verwendung der Ausgabewerte berechnet werden, wobei die Vielzahl von Sensoren in einer mechanischen Ausrüstung vorgesehen ist;
einen Klassifizierungsabschnitt (102), der dazu konfiguriert ist, die Teile der Sensordaten in jeden einer Vielzahl von Sätzen entsprechend einer Größe eines Wertes jedes Teils der Sensordaten zu klassifizieren;
einen Beziehungsindex-Berechnungsabschnitt (103), der dazu konfiguriert ist, einen Beziehungsindex zu berechnen, der eine Beziehung einer Gruppe von zwei Sensoren aus der Vielzahl von Sensoren anzeigt, und zwar auf der Grundlage eines Verteilungszustands von Teilen der Sensordaten, die von den zwei Sensoren der Gruppe erhalten werden, wobei der Beziehungsindex-Berechnungsabschnitt ferner so konfiguriert ist, dass er jeden einer Vielzahl von Beziehungsindizes für jeden der Vielzahl von Sätzen jeder Kombination von zwei Sensoren aus der Vielzahl von Sensoren berechnet, und zwar auf der Grundlage einer Häufigkeit der klassifizierten Teile der Sensordaten in dem jeweiligen Satz;
einen Zustandsinformations-Erzeugungsabschnitt, der dazu konfiguriert ist, unter Verwendung der Vielzahl von Beziehungsindizes Informationen zu erzeugen, die einen Zustand der mechanischen Ausrüstung in dem vorbestimmten Zeitraum anzeigen.

2. Die Informationsverarbeitungsvorrichtung nach Anspruch 1, wobei der Klassifizierungsabschnitt dazu konfiguriert ist, die Sensordaten zu klassifizieren, indem er die Sensordaten einer Vielzahl von Fuzzy-Sätzen zuordnet.

3. Die Informationsverarbeitungsvorrichtung nach einem der Ansprüche 1 bis 2, wobei der Zustandsinformations-Erzeugungsabschnitt dazu konfiguriert ist, als die Information, die den Zustand der mechanischen Ausrüstung anzeigt, ein Bild zu erzeugen, in dem ein Muster, das den Werten der Vielzahl von Beziehungsindizes entspricht, die für jede Gruppe von zwei Sensoren unter der Vielzahl von Sensoren berechnet wurden, in einem Abschnitt gezeichnet wird, der auf einer Bildebene definiert ist und der jeder Gruppe von zwei Sensoren entspricht.

4. Die Informationsverarbeitungsvorrichtung nach einem der Ansprüche 1 bis 2, wobei der Zustandsinformations-Erzeugungsabschnitt dazu konfiguriert ist, als die Information, die den Zustand der mechanischen Ausrüstung anzeigt, eine Information zu erzeugen, die einen Ähnlichkeitsgrad zwischen den folgenden (i) und (ii) anzeigt: (i) einem Verteilungszustand der Sensordaten, die von dem Datenerfassungsabschnitt erhalten werden, und (ii) einem Verteilungszustand der Sensordaten, wenn sich die mechanische Ausrüstung in einem Betriebszustand befindet, der als Referenz dient.

5. Die Informationsverarbeitungsvorrichtung nach einem der Ansprüche 1 bis 4, ferner umfassend
einen Datenvorhersageabschnitt, der dazu konfiguriert ist, auf der Grundlage einer Änderung eines Wertes der durch den Datenerfassungsabschnitt erhaltenen Sensordaten einen vorhergesagten Wert eines Wertes von nachfolgenden Sensordaten zu berechnen,
wobei der Zustandsinformations-Erzeugungsabschnitt dazu konfiguriert ist, auf der Grundlage des vorhergesagten Wertes Informationen zu erzeugen, die einen zukünftigen Zustand der mechanischen Ausrüstung anzeigen.

6. Die Informationsverarbeitungsvorrichtung nach einem der Ansprüche 1 bis 5, ferner umfassend
einen Ursachenbestimmungsabschnitt, der dazu konfiguriert ist, auf der Grundlage der Vielzahl von Beziehungsindizes, die in Bezug auf jede Gruppe von zwei Sensoren unter der Vielzahl von Sensoren berechnet werden, eine Ursache bestimmt, aufgrund derer die mechanische Ausrüstung in den Zustand gefallen ist, der durch die von dem Zustandsinformations-Erzeugungsabschnitt erzeugten Informationen angezeigt wird.

7. Die Informationsverarbeitungsvorrichtung nach einem der Ansprüche 1 bis 5, ferner umfassend
einen Ausrüstungssteuerungsabschnitt, der dazu konfiguriert ist, in einem Fall, in dem ein Beziehungsindex der Vielzahl von Beziehungsindizes, die in Bezug auf jede Gruppe von zwei Sensoren aus der Vielzahl von Sensoren berechnet werden, eine vorbestimmte Bedingung erfüllt, die mechanische Ausrüstung zu veranlassen, einen Vorgang auszuführen, um die mechanische Ausrüstung in einen normalen Zustand zu bringen.

8. Die Informationsverarbeitungsvorrichtung nach einem der Ansprüche 1 bis 5, ferner umfassend
einen Sensorfehlererkennungsabschnitt, der dazu konfiguriert ist, auf der Grundlage der Vielzahl von Beziehungsindizes, die in Bezug auf jede Gruppe von zwei Sensoren unter der Vielzahl von Sensoren berechnet werden, einen Sensor zu erkennen, bei dem ein Fehler aufgetreten ist.

9. Ein Betriebsunterstützungssystem zur Unterstützung des Betriebs einer mechanischen Ausrüstung, umfassend:
eine Informationsverarbeitungsvorrichtung; und
eine Vielzahl von Sensoren, die in der mechanischen Ausrüstung vorgesehen sind,
wobei die Informationsverarbeitungsvorrichtung dazu konfiguriert ist:
Sensordaten zu erhalten, wobei es sich bei den Sensordaten um (i) Ausgabewerte der Vielzahl von Sensoren in einem vorbestimmten Zeitraum oder um (ii) numerische Werte handelt, die unter Verwendung der Ausgabewerte berechnet werden;
die Teile der Sensordaten in jeden einer Vielzahl von Sätzen entsprechend einer Größe eines Wertes jedes Teils der Sensordaten zu klassifizieren;
einen Beziehungsindex, der eine Beziehung einer Gruppe von zwei Sensoren unter der Vielzahl von Sensoren anzeigt, auf der Grundlage eines Verteilungszustandes von Teilen der Sensordaten, die von den zwei Sensoren der Gruppe erhalten werden, zu berechnen und ferner jeden einer Vielzahl von Beziehungsindizes für jeden der Vielzahl von Sätzen jeder Kombination von zwei Sensoren unter der Vielzahl von Sensoren auf der Grundlage einer Häufigkeit der klassifizierten Teile der Sensordaten in dem jeweiligen Satz zu berechnen;
Informationen, die einen Zustand der mechanischen Ausrüstung in dem vorbestimmten Zeitraum anzeigen, unter Verwendung der Vielzahl von Beziehungsindizes zu erzeugen.

10. Ein Informationsverarbeitungsverfahren, das von einer Informationsverarbeitungsvorrichtung auszuführen ist, wobei das Verfahren umfasst:
einen Datengewinnungsschritt zum Erhalten von Sensordaten, wobei die Sensordaten (i) Ausgabewerte einer Vielzahl von Sensoren in einem vorbestimmten Zeitraum oder (ii) numerische Werte sind, die unter Verwendung der Ausgabewerte berechnet werden, wobei die Vielzahl von Sensoren in einer mechanischen Ausrüstung vorgesehen ist;
einen Klassifizierungsschritt zum Klassifizieren der Teile von Sensordaten in jeden einer Vielzahl von Sätzen gemäß einer Größe eines Wertes jedes Teils der Sensordaten;
einen Beziehungsindex-Berechnungsschritt zum Berechnen eines Beziehungsindexes, der eine Beziehung einer Gruppe von zwei Sensoren unter der Vielzahl von Sensoren anzeigt, auf der Grundlage eines Verteilungszustandes von Teilen der Sensordaten, die von den zwei Sensoren der Gruppe erhalten werden, und des weiteren zum Berechnen jedes einer Vielzahl von Beziehungsindizes für jeden der Vielzahl von Sätzen jeder Kombination von zwei Sensoren unter der Vielzahl von Sensoren auf der Grundlage einer Häufigkeit der klassifizierten Teile der Sensordaten in dem jeweiligen Satz;
einen Zustandsinformations-Erzeugungsschritt zum Erzeugen von Informationen, die einen Zustand der mechanischen Ausrüstung in dem vorbestimmten Zeitraum anzeigen, unter Verwendung der Vielzahl von Beziehungsindizes.

11. Ein Informationsverarbeitungsprogramm, um einen Computer zu veranlassen, als die in Anspruch 1 genannte Informationsverarbeitungsvorrichtung zu arbeiten, wobei das Informationsverarbeitungsprogramm den Computer veranlasst, als der Datengewinnungsabschnitt, der Beziehungsindexberechnungsabschnitt, der Zustandsinformations-Erzeugungsabschnitt und der Klassifizierungsabschnitt zu arbeiten.

## Revendications

1. Dispositif de traitement d'informations (1A, 1B, 1C, 1D), comprenant :
une section d'obtention de données (101) configurée pour obtenir des données de capteurs, les données de capteurs étant (i) des valeurs de sortie d'une pluralité de capteurs (S) dans une période prédéterminée ou (ii) des valeurs numériques calculées en utilisant les valeurs de sortie, la pluralité de capteurs étant prévue dans un équipement mécanique ;
une section de classification (102) configurée pour classer les éléments des données de capteurs en chacun d'une pluralité d'ensembles selon la taille de la valeur de chaque élément des données de capteurs ;
une section de calcul d'indice de relation (103) configurée pour calculer un indice de relation indiquant la relation d'un groupe de deux capteurs parmi la pluralité de capteurs, sur la base de l'état de distribution d'éléments des données de capteurs lesquels éléments sont obtenus à partir des deux capteurs du groupe, dans lequel la section de calcul d'indice de relation est en outre configurée pour calculer chacun d'une pluralité d'indices de relation pour chacun de la pluralité d'ensembles de chaque combinaison de deux capteurs parmi la pluralité de capteurs, sur la base de la fréquence des éléments classés des données de capteurs dans l'ensemble respectif ;
une section de génération d'informations d'état configurée pour générer des informations indiquant l'état de l'équipement mécanique dans la période prédéterminée, en utilisant la pluralité d'indices de relation.

2. Dispositif de traitement d'informations selon la revendication 1, dans lequel
la section de classification est configurée pour classer les données de capteurs en attribuant les données de capteurs à une pluralité d'ensembles flous.

3. Dispositif de traitement d'informations selon l'une quelconque des revendications 1 et 2, dans lequel la section de génération d'informations d'état est configurée pour générer, comme information indiquant l'état de l'équipement mécanique, une image dans laquelle un motif correspondant aux valeurs de la pluralité d'indices de relation calculés pour chaque groupe de deux capteurs parmi la pluralité de capteurs est dessiné dans une section qui est définie sur un plan image et qui correspond à chaque groupe de deux capteurs.

4. Dispositif de traitement d'informations selon l'une quelconque des revendications 1 et 2, dans lequel la section de génération d'informations d'état est configurée pour générer, comme informations indiquant l'état de l'équipement mécanique, des informations indiquant un degré de similarité entre les états (i) et (ii) suivants : (i) un état de distribution des données de capteurs obtenues par la section d'obtention de données et (ii) un état de distribution des données de capteurs lorsque l'équipement mécanique est dans un état de fonctionnement qui sert de référence.

5. Dispositif de traitement d'informations selon l'une quelconque des revendications 1 à 4, comprenant en outre
une section de prédiction de données configurée pour calculer, sur la base d'un changement de la valeur des données de capteurs obtenues par la section d'obtention de données, une valeur prédite d'une valeur de données de capteurs suivantes,
la section de génération d'informations d'état étant configurée pour générer, sur la base de la valeur prédite, des informations indiquant un état futur de l'équipement mécanique.

6. Dispositif de traitement d'informations selon l'une quelconque des revendications 1 à 5, comprenant en outre
une section de détermination de cause configurée pour déterminer, sur la base de la pluralité d'indices de relation calculés par rapport à chaque groupe de deux capteurs parmi la pluralité de capteurs, une cause pour laquelle l'équipement mécanique est tombé dans l'état indiqué par les informations générées par la section de génération d'informations d'état.

7. Dispositif de traitement d'informations selon l'une quelconque des revendications 1 à 5, comprenant en outre
une section de commande d'équipement configurée pour, dans un cas où un indice de relation parmi la pluralité d'indices de relation calculés par rapport à chaque groupe de deux capteurs parmi la pluralité de capteurs satisfait une condition prédéterminée, amener l'équipement mécanique à réaliser une opération pour amener l'équipement mécanique à un état normal.

8. Dispositif de traitement d'informations selon l'une quelconque des revendications 1 à 5, comprenant en outre
une section de détection de défaillance de capteur configurée pour détecter, sur la base de la pluralité d'indices de relation calculés par rapport à chaque groupe de deux capteurs parmi la pluralité de capteurs, un capteur dans lequel une défaillance s'est produite.

9. Système de pise en charge de fonctionnement pour prendre en charge le fonctionnement d'un équipement mécanique, comprenant :
un dispositif de traitement d'informations ; et
une pluralité de capteurs prévue dans l'équipement mécanique,
le dispositif de traitement d'informations étant configuré pour :
obtenir des données de capteurs, les données de capteurs étant (i) des valeurs de sortie de la pluralité de capteurs dans une période prédéterminée ou (ii) des valeurs numériques calculées en utilisant les valeurs de sortie ;
classer les éléments des données de capteurs en chacun d'une pluralité d'ensembles selon la taille de la valeur de chaque élément des données de capteurs ;
calculer un indice de relation indiquant la relation d'un groupe de deux capteurs parmi la pluralité de capteurs, sur la base de l'état de distribution des éléments des données de capteurs, lesquels éléments sont obtenus à partir des deux capteurs du groupe, et calculer en outre chacun d'une pluralité d'indices de relation pour chacun de la pluralité d'ensembles de chaque combinaison de deux capteurs parmi la pluralité de capteurs, sur la base de la fréquence des éléments classés des données de capteurs dans l'ensemble respectif ;
générer des informations indiquant l'état de l'équipement mécanique dans la période prédéterminée, en utilisant la pluralité d'indices de relation.

10. Procédé de traitement d'informations à réaliser par un dispositif de traitement d'informations, le procédé comprenant :
une étape d'obtention de données consistant à obtenir des données de capteurs, les données de capteurs étant (i) des valeurs de sortie d'une pluralité de capteurs dans une période prédéterminée ou (ii) des valeurs numériques calculées en utilisant les valeurs de sortie, la pluralité de capteurs étant prévue dans un équipement mécanique ;
une étape de classification consistant à classer les éléments des données de capteurs en chacun d'une pluralité d'ensembles selon la taille de la valeur de chaque élément des données de capteurs ;
une étape de calcul d'indice de relation consistant à calculer un indice de relation indiquant la relation d'un groupe de deux capteurs parmi la pluralité de capteurs, sur la base de l'état de distribution des éléments des données de capteurs, lesquels éléments sont obtenus à partir des deux capteurs du groupe, et à calculer en outre chacun d'une pluralité d'indices de relation pour chacun de la pluralité d'ensemble de chaque combinaison de deux capteurs parmi la pluralité de capteurs, sur la base de la fréquence des éléments classés des données de capteurs dans l'ensemble respectif ;
une étape de génération d'informations d'état consistant à générer des informations indiquant l'état de l'équipement mécanique dans la période prédéterminée, en utilisant la pluralité d'indices de relation.

11. Programme de traitement d'informations pour amener un ordinateur à fonctionner comme le dispositif de traitement d'informations selon la revendication 1, le programme de traitement d'informations amenant l'ordinateur à fonctionner comme la section d'obtention de données, la section de calcul d'indice de relation, la section de génération d'informations d'état et la section de classification.
